# EUROPÄISCHE PATENTANMELDUNG

(11) **EP 3 546 106 A1**
(43) Veröffentlichungstag der Anmeldung: **02.10.2019**
(21) Anmeldenummer: 18020384.6
(22) Anmeldetag: 14.08.2018
(51) Int. Cl.: B23K 11/30

(54) **SCHWEISSGERÄT UND VERFAHREN ZUM WIDERSTANDSSCHWEISSEN**

(30) Priorität: 31.03.2018 DE 102018002653
(71) Anmelder: Linde Aktiengesellschaft, 80331 München (DE)
(72) Erfinder: Soder, Marcel, 4324 Obermumpf (CH)

(57) **Zusammenfassung**

Die Erfindung betrifft ein Schweißgerät (1) zum Widerstandsschweißen mit zwei Schweißelektroden (2), von denen zumindest eine mit einem Schutzgasanschluss (3) verbunden ist, derart, dass durch eine poröse Struktur der Schweißelektroden (2) Schutzgas nach außen dringen kann. Weiterhin betrifft die Erfindung ein Verfahren zum Widerstandsschweißen, wobei mindestens zwei Bleche (6) durch zwei Schweißelektroden (2) zusammengedrückt werden und ein Stromfluss zwischen den zwei Schweißelektroden (2) erzeugt wird, wobei innerhalb zumindest einer der Schweißelektroden (2) ein Schutzgas zugeführt wird, das durch eine poröse Struktur der Schweißelektrode(n) (2) wenigstens auf eine Oberfläche der mindestens zwei Bleche (6) geleitet wird.

## Beschreibung

Die Erfindung betrifft ein Schweißgerät und ein Verfahren zum Widerstandsschweißen.

### Stand der Technik

Widerstandsschweißen ist ein Verfahren, mit welchem Oberflächen von Werkstücken in einem oder mehreren Punkten unter Ausnutzung des elektrischen Widerstands der Werkstücke, die unter Kraft durch Elektroden zusammengehalten werden, durch Ohm'sche Wärmeerzeugung zusammengefügt werden. Die sich berührenden Oberflächen in dem Bereich der Stromkonzentration werden durch einen Kurzzeitimpuls von niedriggespanntem Strom hoher Stärke erwärmt, um eine geschmolzene Linse des Schweißmetalls zu bilden. Wenn der Stromfluss aufhört, wird die Elektrodenkraft zunächst beibehalten, während sich die Schweiße rasch abkühlt und erstarrt. Nach jeder Schweißung werden die Elektroden zurückgezogen, was gewöhnlich in einem Bruchteil einer Sekunde ausgeführt ist.

Beim Widerstandsschweißen werden Metalle ohne die Einbringung von Zusatzwerkstoffen verbunden. Aufgrund der Oberflächenrauigkeit des Grundwerkstoffes kann der Strom nur über eine relativ kleine Fläche übertragen werden, was durch den großen elektrischen Widerstand schließlich zu einer starken Erwärmung und damit zu einer Verbindung der angeschmolzenen Materialoberfläche führt, wodurch sich eine Schweißverbindung bildet. Es gibt eine Reihe verschiedener Widerstandsschweißverfahren. Ein Beispiel dafür ist das Punktschweißen, das aus dem Automobilbau bekannt ist.

Der Vorteil der Widerstandspunktschweißung ist auf die Tatsache zurückzuführen, dass dieses Verfahren rasche Schweißungen ergibt und sich für die Automation und Einbeziehung in Großserienproduktions-Montagestraßen mit anderen Fertigungsoperationen anbietet.

Vorteile sind die sehr kurze Bearbeitungszeit, das Fehlen von Zusatzwerkstoffen, die Bedienersicherheit aufgrund der niedrigen Spannung, Sauberkeit und

Umweltfreundlichkeit und das Entstehen einer zuverlässigen elektromechanischen Verbindung.

Ein Problem bei dem Widerstandsschweißen ist, dass in Umgebungsluft durch die Erwärmung eine Oxidation an Metalloberflächen unvermeidlich ist.

Metalloberflächen (z.B. Stahl bzw. Eisenwerkstoffe) oxidieren bei erhöhten Temperaturen (Thermo-Verfärbung). Kupfer, Silber und weitere Metalle oxidieren bzw. verfärben sich schon ohne Temperatureinflüsse. Bei Stahl und Legierungen führt zum Beispiel ein dauerhaft erhöhter Temperatureinfluss zur Hochtemperaturkorrosion. Der oxidative Angriff beziehungsweise die Korrosion wird durch Verfärbungen der Oberfläche sichtbar (Thermal: Anlauf- und Anlassfarben und Korrosionsprodukte).

Bekannt aus dem Stand der Technik ist der Oxidationsschutz von erwärmten oder schmelzflüssigen Metallen entweder durch Oxidationsschutz-Beschichtungen oder durch umströmendes inertes Gas.

Oxidationsschutz-Beschichtungen eignen sich nicht für Schweißvorgänge, da für das Widerstandsschweißen ein direkter Kontakt mit dem zu schweißenden Material notwendig ist.

Das Prinzip des umströmenden inerten Gases wird in der industriellen Technik vielfältig angewandt, etwa beim Formieren, in der Metallurgie oder beim gasgeschützten Schweißen. In allen Fällen muss das Gas durch eine geeignete Zuführung von außen auf die zu schützende erwärmte oder schmelzflüssige Metalloberfläche gebracht werden, um diese durch das Verdrängen von Luftsauerstoff vor Oxidation zu schützen.

Es existieren eine ganze Reihe gasgeschützter Schweißverfahren, für die die Verwendung von inerten Gasen zum Oxdidationsschutz bekannt ist, wie z.B. das MAG-Schweißen oder das Wolfram-Inertgas-Schweißen. Jedoch eignen sich solche Techniken der Gaszufuhr nicht für das Widerstandsschweißen, da beim Widerstandsschweißen die Elektroden in direktem Kontakt mit den zu schweißenden Metalloberflächen sind und insbesondere an den Kontaktstellen, an denen eine Umspülung mit inerten Gasen nicht möglich ist, oxidative Verfärbungen beim Schweißen auftreten.

Es ist demzufolge Aufgabe der vorliegenden Erfindung, die oben genannten Nachteile zu lindern beziehungsweise ganz zu überwinden.

### Offenbarung der Erfindung

Die Erfindung schlägt ein Schweißgerät sowie ein Verfahren zum Widerstandsschweißen gemäß den unabhängigen Patentansprüchen vor. Vorteilhafte Ausgestaltungen ergeben sich aus den jeweiligen Unteransprüchen und der nachfolgenden Beschreibung.

### Vorteile der Erfindung

Erfindungsgemäß weist ein Schweißgerät zum Widerstandsschweißen wenigstens zwei Schweißelektroden auf, von denen zumindest eine mit einem Schutzgasanschluss verbunden ist, derart, dass bei Zufuhr von Schutzgas durch den Schutzgasanschluss durch eine poröse Struktur der mindestens einen Schweißelektrode Schutzgas nach außen dringen kann.

Dadurch, dass eine Schweißelektrode mit einem Schutzgas beaufschlagt wird, derart, dass durch eine poröse Struktur der Schweißelektrode Schutzgas nach außen dringen kann, kann auch die Kontaktstelle beim Widerstandsschweißen mit Schutzgas umspült werden. Versuche zeigen, dass eine unvermeidliche Oxidation dadurch stark zurückgeht. Auch eine Umgebung der Kontaktstelle kann auf diese Weise mit Schutzgas umspült werden.

Zweckmäßigerweise weist die zumindest eine Schweißelektrode, die mit dem Schutzgasanschluss verbunden ist, einen inneren Hohlraum auf, der mit dem Schutzgasanschluss verbunden ist. Durch den Hohlraum kann das Schutzgas besonders vorteilhaft und gleichmäßig von innen nach außen zu der äußeren Oberfläche der Schweißelektroden gelangen, so dass die Kontaktstelle beim Widerstandsschweißen besonders gleichmäßig mit Schutzgas umspült wird.

In einer vorteilhaften Ausführungsform sind die Schweißelektroden aus einem gesinterten Material. Gesintertes Material weist den Vorteil auf, dass es in der Regel die notwendige Porosität aufweist, damit durch die poröse Struktur der Schweißelektroden Schutzgas nach außen dringen kann.

Vorteilhaft sind die Schweißelektroden aus Graphit. Graphit ist ein an sich poröses Material, durch das Schutzgas von innen auf die Oberfläche und insbesondere zu der Kontaktstelle der Schweißelektroden gelangen kann.

Zweckmäßigerweise leitet der Schutzgasanschluss Argon, Helium und/oder Stickstoff. Dies sind Gase, die sich besonders als Oxidationsschutz eignen, da sie den Sauerstoff von einer Oberfläche der Schweißelektrode verdrängen und eine niedrige Reaktionsfreudigkeit aufweisen.

Gemäß einem weiteren Aspekt der Erfindung wird ein Verfahren zum Widerstandsschweißen vorgeschlagen, wobei mindestens zwei Bleche durch zwei Schweißelektroden zusammengedrückt werden und ein Stromfluss zwischen den zwei Schweißelektroden erzeugt wird, wobei zumindest einer der Schweißelektroden ein Schutzgas zugeführt wird, das durch eine poröse Struktur der Schweißelektrode(n) wenigstens auf eine Oberfläche der mindestens zwei Bleche geleitet wird. Auf diese Weise gelangt vorteilhaft Schutzgas zu einer Kontaktstelle zwischen Schweißelektrode und Blech, wo ein effektiver Oxidationsschutz bereitgestellt werden kann. Zweckmäßigerweise wird das Schutzgas in ein Inneres einer Schweißelektrode geleitet, so dass es besonders gleichmäßig durch die poröse Struktur zu einer Kontaktstelle gelangen kann.

In einer vorteilhaften Ausführungsform wird das Schutzgas durch die poröse Struktur der Schweißelektroden weiterhin in einen offenen Raum um die Schweißelektroden herum geleitet. Auf diese Weise können Anlauffarben vorteilhaft auch in einer Umgebung der Schweißelektrode vermieden werden.

Zweckmäßigerweise wird als Widerstandsschweißverfahren ein Widerstandspunktschweißverfahren, ein Widerstandsbuckelschweißverfahren, ein Widerstandsbolzenschweißverfahren, ein Widerstandsrollennahtschweißverfahren, ein Widerstandsstumpfschweißverfahren, ein Abbrennstumpfschweißverfahren oder ein Kondensator-Impulsschweißverfahren durchgeführt. Das Verwenden eines Schutzgases lässt sich auf beliebige Widerstandsschweißverfahren übertragen, in denen wenigstens eine Schweißelektrode mit poröser Struktur verwendet wird.

Vorteilhaft wird als Stromfluss ein Wechselstromfluss erzeugt, bevorzugt mit einer Frequenz zwischen 40 und 70 Hertz. Dies ist vorteilhaft, da dies einer üblichen Netzstromfrequenz entspricht. Möglich ist jedoch auch, als Stromfluss einen Gleichstromfluss zu erzeugen.

Insbesondere wird für das erfindungsgemäße Verfahren ein erfindungsgemäßes Schweißgerät verwendet.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung beschrieben:

### Kurze Beschreibung der Zeichnungen

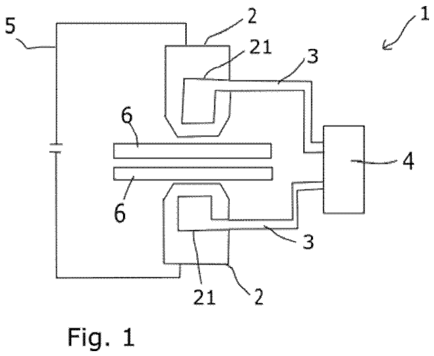

Fig. 1 zeigt eine schematische Darstellung einer Ausführungsform eines erfindungsgemäßen Schweißgerätes

### Ausführliche Figurenbeschreibung

In Figur 1 ist eine schematische Darstellung einer Ausführungsform eines erfindungsgemäßen Schweißgerätes dargestellt und mit 1 bezeichnet.

Das Schweißgerät 1 zum Widerstandspressschweißen weist zwei Schweißelektroden 2 auf, die jeweils mit einem Schutzgasanschluss 3 verbunden sind, derart, dass durch eine poröse Struktur der Schweißelektroden 2 Schutzgas nach außen dringen kann. Die Schutzgasanschlüsse 3 sind jeweils mit einem Schutzgasbehälter 4 verbunden. Dieser kann bevorzugt eine Gasflasche sein, die mit Argon, Stickstoff und/oder Helium oder einem anderen bekannten Schutzgas gefüllt ist.

Dadurch, dass die Schweißelektroden 2 mit einem Schutzgas beaufschlagt werden, derart, dass durch eine poröse Struktur der Schweißelektroden Schutzgas nach außen dringen kann, kann auch die Kontaktstelle beim Widerstandsschweißen mit Schutzgas umspült werden. Die poröse Struktur der Schweißelektroden 2 kommt in der Regel durch ein gesintertes Material und/oder ein Graphitmaterial zustande. Jedoch ist das Material der Schweißelektroden 2 nicht darauf beschränkt.

Zweckmäßigerweise weisen die Schweißelektroden 2, die mit dem Schutzgasanschluss 3 verbunden sind, einen inneren Hohlraum 21 auf, der mit dem Schutzgasanschluss 3 verbunden ist. Durch den Hohlraum 21 kann das Schutzgas besonders vorteilhaft und gleichmäßig von innen nach außen zu der äußeren Oberfläche der Schweißelektroden 2 gelangen, so dass eine Kontaktstelle beim Widerstandsschweißen besonders gleichmäßig mit Schutzgas umspült wird.

Als zu fügendes Material sind vorteilhaft Metallbleche 6 vorgesehen. In Figur 1 sind zwei Metallbleche 6 abgebildet, die von den beiden Schweißelektroden 2 beim Widerstandsschweißen vorteilhaft zusammengepresst werden. Bevorzugt ist das Widerstandsschweißen in dieser Ausführungsform ein Widerstandspressschweißen. Dabei werden die zu schweißenden Teile von einem sehr hohen Strom durchflossen und erzeugen an der oder den Stoßstelle(n) eine Widerstandserwärmung. Diese Erwärmung kann so groß werden, dass die Teile dabei verschmelzen und sich eine Schweißverbindung bildet.

Insbesondere können die Metallbleche 6 Kupferbleche sein. Es können auch mehr als zwei Metallbleche 6 übereinandergelegt werden, bevorzugt drei bis 20, besonders bevorzugt vier bis zehn. Diese Metallbleche 6 werden bevorzugt an beiden Enden miteinander verschweißt. In der Mitte zwischen den Schweißstellen bleiben die Bleche unverschweißt. Dadurch ergibt sich eine flexible Stromleitschiene, die z.B. für Elektrolokomotiven verwendet wird.

Beim Schweißvorgang werden die Metallbleche 6 von oben und unten mittels zweier gesinterter Graphitblöcke, die als Schweißelektroden 2 dienen, zusammengepresst.

Die Schweißelektroden 2 werden direkt als Schutzgaszuführung genutzt, indem die Schweißelektroden 2 mit Zuleitungsrohren verschraubt werden. Das Schutzgas fließt durch die poröse Struktur der Schweißelektroden direkt auf das Werkstück und auch in den offenen Raum drumherum. Dadurch wird eine großflächige Spülung nicht nur der Werkstückkanten, sondern auch der Werkstückoberflächen erreicht. Die sonst unvermeidliche Oxidation geht stark zurück.

## Patentansprüche

1. Schweißgerät (1) zum Widerstandsschweißen mit:
zwei Schweißelektroden (2), von denen zumindest eine mit einem Schutzgasanschluss (3) verbunden ist, derart, dass bei Zufuhr von Schutzgas durch den Schutzgasanschluss (3) durch eine poröse Struktur der mindestens einen Schweißelektrode (2) Schutzgas nach außen dringen kann.

2. Schweißgerät (1) nach Anspruch 1, wobei die zumindest eine Schweißelektrode (2), die mit dem Schutzgasanschluss (3) verbunden ist, einen inneren Hohlraum (21) aufweist, der mit dem Schutzgasanschluss (3) verbunden ist.

3. Schweißgerät (1) nach Anspruch 1 oder 2, wobei die zumindest eine Schweißelektrode (2) aus einem gesinterten Material ist.

4. Schweißgerät (1) nach einem der vorstehenden Ansprüche, wobei die zumindest eine Schweißelektrode (2) aus Graphit ist.

5. Schweißgerät (1) nach einem der vorstehenden Ansprüche, wobei der Schutzgasanschluss Argon, Helium und/oder Stickstoff leitet.

6. Verfahren zum Widerstandsschweißen, wobei mindestens zwei Bleche (6) durch zwei Schweißelektroden (2) zusammengedrückt werden und ein Stromfluss zwischen den zwei Schweißelektroden (2) erzeugt wird, **dadurch gekennzeichnet, dass** innerhalb zumindest einer der Schweißelektroden (2) ein Schutzgas zugeführt wird, das durch eine poröse Struktur der Schweißelektrode(n) (2) wenigstens auf eine Oberfläche der mindestens zwei Bleche (6) geleitet wird.

7. Verfahren nach Anspruch 6, wobei als Schutzgas Argon, Helium und/oder Stickstoff zugeführt wird.

8. Verfahren nach einem der Ansprüche 6 oder 7, wobei das Schutzgas durch die poröse Struktur der Schweißelektrode(n) (2) weiterhin in einen offenen Raum um die Schweißelektrode(n) (2) herum geleitet wird.

9. Verfahren nach einem der Ansprüche 6 bis 8, wobei als Widerstandsschweißverfahren ein Widerstandspunktschweißverfahren, ein Widerstandsbuckelschweißverfahren, ein Widerstandsbolzenschweißverfahren, ein Widerstandsrollennahtschweißverfahren, ein Widerstandsstumpfschweißverfahren, ein Abbrennstumpfschweißverfahren oder ein Kondensator-Impulsschweißverfahren durchgeführt wird.

10. Verfahren nach einem der Ansprüche 6 bis 9, wobei als Stromfluss ein Wechselstromfluss erzeugt wird, bevorzugt mit einer Frequenz zwischen 40 und 70 Hertz.

11. Verfahren nach einem der Ansprüche 6 bis 9, wobei als Stromfluss ein Gleichstromfluss erzeugt wird.

12. Verfahren nach einem der Ansprüche 6 bis 11, wobei ein Schweißgerät (1) nach einem der Ansprüche 1 bis 5 verwendet wird.
